# EUROPÄISCHE PATENTSCHRIFT

(11) **EP 1 774 274 B1**
(45) Veröffentlichungstag und Bekanntmachung des Hinweises auf die Patenterteilung: **21.10.2009**
(21) Anmeldenummer: 05782944.2
(22) Anmeldetag: 26.08.2005
(51) Int. Cl.: G01M 13/02, G01M 1/34

(54) **VORRICHTUNG ZUR DURCHFÜHRUNG VON SCHWINGUNGSMESSUNGEN AN EINEM EINEN ROTOR AUFWEISENDEN PRÜFLING MIT AUSWUCHTEINRICHTUNG**
DEVICE FOR CARRYING OUT OSCILLATION MEASUREMENTS ON A SAMPLE COMPRISING A ROTOR AND PROVIDED WITH A BALANCING DEVICE
DISPOSITIF PERMETTANT D'EFFECTUER DES MESURES D'OSCILLATIONS SUR UNE STRUCTURE A TESTER COMPORTANT UN ROTOR ET POURVUE D'UN DISPOSITIF D'EQUILIBRAGE

(43) Veröffentlichungstag der Anmeldung: 18.04.2007
(73) Patentinhaber: ThyssenKrupp EGM GmbH, 30855 Langenhagen (DE)
(72) Erfinder: BUSCH, Klaus-Joachim, 29336 Nienhagen (DE); KÜHL, Joakim, 29693 Hodenhagen (DE); EICKE, Andreas, 30916 Isenhagen-HB (DE)
(74) Vertreter: Wagner, Carsten
(86) Internationale Anmeldenummer: PCT/EP2005/009240
(87) Internationale Veröffentlichungsnummer: WO 2007/022793

(56) Entgegenhaltungen:
- WO-A-02/23149
- WO-A-03/062766
- DE-A- 3 538 229
- US-A- 5 877 420

## Beschreibung

Die Erfindung betrifft eine Vorrichtung der im Oberbegriff des Anspruchs 1 genannten Art zur Durchführung von Schwingungsmessungen an einem wenigstens einen Rotor aufweisenden Prüfling, insbesondere einem Getriebe.

Derartige Vorrichtungen sind als Bestandteile von Prüfständen beispielsweise durch DE 39 05 983 A1, DE 100 37 412 A1 und DE 102 34 022 A1 bekannt. Sie dienen beispielsweise dazu, Funktionsprüfungen an Prüflingen, beispielsweise Getrieben, vorzunehmen, indem der Rotor des Prüflinge durch einen externen Antrieb drehangetrieben wird und die daraus resultierenden Schwingungen aufgezeichnet werden. Durch eine Auswertung der aufgezeichneten Schwingungen ist dann beurteilbar, ob der jeweilige Prüfling in Ordnung ist oder ob Funktionsstörungen vorliegen. Die bekannten Vorrichtungen weisen einen Grundkörper, an dem eine Halterung für den Prüfling angeordnet ist, und eine Schwingungsmeßeinrichtung zur Messung von durch eine Rotation des Rotors des Prüflings verursachten Schwingungen während eines Prüfvorganges auf.

Durch US-A-5 877 420 ist eine Vorrichtung zum Auswuchten einer Antriebseinheit bekannt. DE-A1-35 38 229 offenbart ein mittels Blattfedern ortsfest abgestütztes und parallel geführtes Schwing- oder Rütteltragorgan.

Der Erfindung liegt die Aufgabe zugrunde, eine Vorrichtung der im Oberbegriff des Anspruchs 1 so weiterzubilden, daß die Prüfung von Prüflinge durch Durchführung von Schwingungsmessungen schneller und effizienter gestaltet ist.

Diese Aufgabe wird durch die im Anspruch 1 angegebene Lehre gelöst.

Der Grundgedanke der erfindungsgemäßen Lehre besteht darin, mittels einer erfindungsgemäßen Vorrichtung nicht nur Schwingungsmessungen an dem Prüfling durchzuführen, sondern darüber hinaus den Prüfling, insbesondere vor der Durchführung der Schwingungsmessungen, mittels der Vorrichtung auszuwuchten. Ein Auswuchten des Prüflings ist in aller Regel vor der Durchführung von Schwingungsmessungen erforderlich, da Unwuchten des Rotors des Prüflings das Prüfungsergebnis ansonsten verfälschen und unbrauchbar machen könnten. Darüber hinaus kann ein Auswuchten des Prüflings auch für seine einwandfreie Funktion unabdingbar sein.

Erfindungsgemäß ist hierzu eine an dem Grundkörper angeordnete oder wenigstens teilweise in den Grundkörper integrierte Auswuchteinrichtung zum Feststellen und/oder Beseitigen einer Unwucht des Rotors vorgesehen. Erfindungsgemäß kann damit mittels ein und derselben Vorrichtung der Rotor des Prüflings sowohl ausgewuchtet als auch Schwingungsmessungen unterzogen werden. Somit ist zur Ausführung dieser Arbeiten nur noch eine einzige Vorrichtung erforderlich, so daß der apparative Aufwand zum Auswuchten und Prüfen eines Prüflings gegenüber herkömmlichen Vorrichtungen wesentlich verringert ist. Da die Auswuchteinrichtung an dem Grundkörper angeordnet oder wenigstens teilweise in den Grundkörper integriert ist, ist eine separate Auswuchtmaschine nicht mehr erforderlich. Dies führt zu einer wesentlichen Kostenersparnis.

Ein weiterer Vorteil der erfindungsgemäßen Vorrichtung besteht darin, daß das Auswuchten und Prüfen von Prüflingen wesentlich effizienter gestaltet ist, da das Auswuchten und die Durchführung von Schwingungsmessungen erfolgen kann, ohne daß der Prüfling aus der Halterung der erfindungsgemäßen Vorrichtung gelöst werden muß. Der Prüfling kann somit sowohl während des Auswuchtens als auch während der Durchführung von Schwingungsmessungen in der Halterung verbleiben. Damit entfallen die zusätzlichen Arbeitsschritte des Entnehmens des Prüflings aus einer Halterung einer Auswuchtmaschine und des Einbringens des Prüflings in eine Halterung eines Prüfstandes. Erfindungsgemäß sind somit die Arbeitskosten insbesondere dann gesenkt, wenn das Beschicken der Halterung mit dem Prüfling und das Entnehmen des Prüflings aus der Halterung von Hand erfolgen.

Ein weiterer Vorteil der erfindungsgemäßen Vorrichtung besteht darin, daß ihre Herstellungskosten gegenüber herkömmlichen Anordnungen, die aus einer separaten Auswuchtmaschine und einer separaten Vorrichtung zur Durchführung von Schwingungsmessungen bestehen, wesentlich verringert sind.

Mittels der erfindungsgemäß an dem Grundkörper angeordneten oder wenigstens teilweise in den Grundkörper integrierten Auswuchteinrichtung wird zunächst festgestellt, ob ein Rotor eines Prüflings eine Unwucht aufweist. Ergibt sich hierbei, daß eine Unwucht vorliegt, so wird diese Unwucht daran anschließend im Rahmen vorgegebener Toleranzen mittels der Auswuchteinrichtung beseitigt oder verringert. Ergibt die Prüfung demgegenüber, daß der Prüfling keine oder eine vernachlässigbar geringe Unwucht aufweist, so ist eine Beseitigung einer Unwucht nicht erforderlich. Es kann dann unmittelbar und ohne vorhergehenden Auswuchtvorgang eine Schwingungsmessung an dem Prüfling durchgeführt werden.

Um einen stabilen und durch externe Schwingungen in möglichst geringem Maße beinflußbaren mechanischen Aufbau der Vorrichtung zu erhalten, sieht eine Weiterbildung der erfindungsgemäßen Lehre vor, daß der Grundkörper einen Tisch aufweist, an dem die Halterung für den Prüfling befestigt ist.

Die Halterung zum Halten des Prüflings während des Auswuchtvorganges und des Schwingungsmeßvorganges kann entsprechend den jeweiligen Anforderungen gewählt werden. Eine vorteilhafte Weiterbildung der erfindungsgemäßen Lehre sieht insoweit vor, daß die Halterung eine Spannvorrichtung zum Einspannen des Prüflings aufweist. Aufgrund der Spannvorrichtung ist das Einbringen des Prüflings in die Halterung und das Entnehmen des Prüflings aus der Halterung wesentlich vereinfacht und damit zeitsparender gestaltet.

Eine außerordentlich vorteilhafte Weiterbildung der erfindungsgemäßen Lehre sieht vor, daß der Tisch als Schwingtisch ausgebildet ist und schwingfähig mit einer Basis des Grundkörpers verbunden ist, insbesondere sich an der Basis abstützt. Bei dieser Ausführungsform ist der Tisch schwingfähig an der Basis gelagert und kann durch den Rotor des Prüflings in Schwingungen versetzt werden. Die Messung und Auswertung der Schwingungen des Schwingtisches erlaubt dann insbesondere Rückschlüsse darauf, ob der Rotor des Prüflings eine Unwucht aufweist. Der Schwingtisch kann beispielsweise in einer rahmenartigen Basis des Grundkörpers aufgehängt sein und sich über Federn, beispielsweise Schraubenfedern, die sich von seinem äußeren Umfang zu der rahmenartigen Basis erstrecken, an der Basis abstützen. Bei einer Schwingung des Schwingtisches werden die Federn dann in Schwingrichtung zusammengedrückt bzw. gedehnt.

Eine vorteilhafte Weiterbildung der vorgenannten Ausführungsform sieht vor, daß der Schwingtisch um wenigstens eine Gelenkachse beweglich und über Federmittel elastisch federnd an der Basis gelagert ist. Bei dieser Ausführungsform ergibt sich mit einem besonders einfachen mechanischen Aufbau eine schwingfähige Lagerung des Schwingtisches.

Bei der vorgenannten Ausführungsform sind die Federmittel innerhalb weiter Grenzen wählbar. Eine besonders vorteilhafte Weiterbildung der erfindungsgemäßen Lehre sieht vor, daß die Federmittel wenigstens eine Blattfeder aufweisen, wobei im Bereich der Verbindungsstellen der Blattfeder mit dem Tisch und der Basis jeweils eine Gelenkachse gebildet ist. Derartige Blattfedern stehen als einfache und kostengünstige Standardbauteile mit innerhalb weiter Grenzen variierender Federkonstanten zur Verfügung und erlauben damit auf einfache Weise eine Auslegung der erfindungsgemäßen Vorrichtung entsprechend den jeweiligen Anforderungen. Darüber hinaus sind derartige Blattfedern relativ kostengünstig.

Form, Größe, Anzahl und Federkonstante der Blattfeder oder der Blattfedern sind in weiten Grenzen wählbar. Eine vorteilhafte Weiterbildung der erfindungsgemäßen Lehre sieht vor, daß vier zueinander beabstandete Blattfedern vorgesehen sind, die vorzugsweise auf den Eckpunkten eines Rechteckes angeordnet sind. Bei dieser Ausführungsform ergibt sich in der für die Durchführung von Schwingungsmessungen erforderlichen Weise einerseits eine statisch bestimmte Lagerung des Schwingtisches an der Basis und andererseits eine hohe Stabilität der Vorrichtung.

Die Drehachse des Rotors des Prüflings kann grundsätzlich relativ zu der Gelenkachse oder den Gelenkachsen eine beliebige Ausrichtung haben, solange eine Drehung des Rotors den Schwingtisch in einem zur Feststellung von Unwuchten erforderlichen Maße in Schwingungen versetzt. Um eine Anregung des Schwingtisches in Bezug auf Schwingungen durch eine Unwucht des Rotors zu erleichtern, sieht eine vorteilhafte Weiterbildung der erfindungsgemäßen Lehre vor, daß die Halterung relativ zu der Gelenkachse oder den Gelenkachsen derart angeordnet ist, daß bei Aufnahme eines Prüflings in der Halterung die Drehachse seines Rotors zu der Gelenkachse oder den Gelenkachsen im wesentlichen parallel ist.

Eine andere außerordentlich vorteilhafte Weiterbildung der erfindungsgemäßen Lehre sieht vor, daß die Eigenfrequenz einer durch den Schwingtisch und die Federmittel gebildeten Schwinganordnung so gewählt ist, daß sie höher ist als eine maximale Schwingfrequenz des Prüflings, die durch eine maximale Drehzahl seines Rotors während des Prüfvorganges festgelegt ist. Auf diese Weise ist verhindert, daß die Schwinganordnung während des Prüfvorganges mit ihrer Eigenfrequenz angeregt wird, was zu einer Verfälschung der Prüfergebnisse und zu einer Beschädigung oder sogar Zerstörung der Vorrichtung führen könnte.

Eine andere vorteilhafte Weiterbildung der erfindungsgemäßen Lehre sieht vor, daß die Schwingungsmeßeinrichtung wenigstens einen Schwingungssensor aufweist, der in Schwingungsübertragungsverbindung mit dem Prüfling steht oder bringbar ist. Mittels dieses der Schwingungsmeßeinrichtung zugeordneten Schwingungssensors können während eines Prüfvorganges Schwingungen des Prüflings erfaßt und ausgewertet werden.

Eine andere vorteilhafte Weiterbildung der erfindungsgemäßen Lehre sieht vor, daß die Auswuchteinrichtung wenigstens einen Schwingungssensor aufweist, der in Schwingungsübertragungsverbindung mit dem Schwingtisch steht. Der der Auswuchteinrichtung zugeordnete Schwingungssensor dient hierbei zur Erfassung von Schwingungen des Schwingtisches, wobei anhand einer Auswertung des Ausgangssignals des Schwingungssensors beispielsweise und insbesondere Rückschlüsse auf eine Unwucht des oder eines Rotors des Prüflings gezogen werden können.

Eine andere vorteilhafte Weiterbildung der erfindungsgemäßen Lehre sieht vor, daß der Schwingungssensor ein berührungslos arbeitender Sensor ist, wobei Weiterbildungen dieser Ausführungsform vorsehen, daß der Schwingungssensor als Laservibrometer oder als akustischer Sensor ausgebildet ist.

Eine andere vorteilhafte Weiterbildung der erfindungsgemäßen Lehre sieht vor, daß der Schwingungssensor ein berührend arbeitender Sensor ist. Gemäß einer vorteilhaften Weiterbildung kann der Schwingungssensor an dem Prüfling anbringbar oder angebracht sein. Auf diese Weise werden Schwingungen des Prüflings unmittelbar an dem Prüfling erfaßt, so daß Störeinflüsse durch nicht von dem Prüfling herrührende Schwingungen verringert oder vermieden sind. Hierdurch ist die Genauigkeit der Prüfergebnisse verbessert. Hierbei kann der Schwingungssensor an dem Prüfling befestigt werden, beispielsweise an den Prüfling angeklebt werden. Es ist erfindungsgemäß jedoch auch möglich, den Schwingungssensor an einer relativ zu dem Prüfling beweglichen Halterung anzuordnen. Beispielsweise kann der Schwingungssensor mit einem Pneumatikzylinder verbunden sein und über den Pneumatikzylinder zur Durchführung von Schwingungsmessungen in Anlage mit dem Prüfling gebracht und nach Durchführung der Schwingungsmessungen außer Kontakt von dem Prüfling gebracht werden. Um bei einer solchen Ausführungsform einen stetigen Kontakt des Schwingungssensors mit dem Prüfling zu gewährleisten, kann der Schwingungssensor über Federmittel gegen den Prüfling vorgespannt sein.

Eine vorteilhafte Weiterbildung der Ausführungsformen mit dem berührend arbeitenden Sensor sieht vor, daß der Schwingungssensor als Beschleunigungssensor ausgebildet ist. Derartige Beschleunigungssensoren stehen als einfache und kostengünstige Standardbauteile zur Verfügung und sind relativ kostengünstig.

Grundsätzlich kann ein der Schwingungsmeßeinrichtung zugeordneter Sensor an dem Tisch des Grundkörpers angeordnet sein. Um den mechanischen Aufbau der erfindungsgemäßen Vorrichtung zu vereinfachen, sieht eine vorteilhafte Weiterbildung der erfindungsgemäßen Lehre vor, daß sich der Schwingungssensor an einer Feder der Federmittel, insbesondere an einer Blattfeder abstützt. Hierbei kann sich der Schwingungssensor insbesondere an einem Teil der Feder abstützen, das während einer Schwingung des Schwingtisches eine möglichst große Auslenkung erfährt. Auf diese Weise ist eine genaue Erfassung von Schwingungen des Schwingtisches erleichtert.

Eine Weiterbildung der vorgenannten Ausführungsformen sieht vor, daß der Schwingungssensor an einer unterhalb des Schwingtisches angeordneten Halterung gehalten ist. Bei dieser Ausführungsform ist der Schwingungssensor unterhalb des Schwingtisches angeordnet. Da der Raum unterhalb des Schwingtisches in der Regel ohnehin frei ist, ist auf diese Weise die Raumausnutzung verbessert.

Um den Schwingungssensor während einer Auslenkung der Feder stets in Kontakt mit derselben zu halten, sieht eine vorteilhafte Weiterbildung vor, daß der Schwingungssensor gegen die Feder der Federmittel elastisch vorgespannt ist.

Form, Größe, Anzahl und Ausbildung der Schwingungssensoren sind entsprechend den jeweiligen Anforderungen in weiten Grenzen wählbar. Eine vorteilhafte Weiterbildung der erfindungsgemäßen Lehre sieht vor, daß der Schwingungsmeßeinrichtung einerseits und der Auswuchteinrichtung andererseits jeweils wenigstens ein separater Schwingungssensor zugeordnet ist. Diese Ausführungsform hat den Vorteil, daß die Schwingungssensoren an die jeweilige Erfassungsaufgabe angepaßt werden können, indem nämlich der der Auswuchteinrichtung zugeordnete Sensor an die Erfassung von eine Unwucht des Rotors charakterisierenden Schwingungen und der der Schwingungsmeßeinrichtung zugeordnete Schwingungssensor an die Erfassung von die Funktion des Prüflings charakterisierenden Schwingungen.

Eine andere vorteilhafte Weiterbildung der erfindungsgemäßen Lehre sieht vor, daß der Schwingungsmeßeinrichtung und der Auswuchteinrichtung wenigstens ein gemeinsamer Schwingungssensor angeordnet ist. Bei dieser Ausführungsform werden also sowohl eine Unwucht charakterisierende Schwingungen als auch die Funktion des Prüflings charakterisierende Schwingungen mittels ein und desselben Sensors aufgenommen. Auf diese Weise ist der bauliche Aufwand weiter verringert, da grundsätzlich nur noch ein Schwingungssensor erforderlich ist.

Eine andere vorteilhafte Weiterbildung der erfindungsgemäßen Lehre sieht Steuerungsmittel zur vorzugsweise automatischen Ansteuerung der Schwingungsmeßeinrichtung und der Auswuchteinrichtung und/oder Auswertungsmittel zur Auswertung von Ausgangssignalen des Schwingungssensors oder der Schwingungssensoren vor. Durch die Steuerungsmittel sind beispielsweise und insbesondere Steuerungsvorgänge zur Ansteuerung der Auswuchteinrichtung und der Schwingungsmeßeinrichtung automatisch ausführbar.

Eine außerordentlich vorteilhafte Weiterbildung der vorgenannten Ausführungsform sieht vor, daß die Vorrichtung nach einem Auswuchten eines Rotors eines Prüflings in einem Auswuchtmodus mittels der Auswuchteinrichtung durch die Steuerungsmittel automatisch in einen Prüfmodus umschaltbar ist, in dem mittels der Schwingungsmeßeinrichtung durch eine Rotation des Rotors des Prüflings verursachte Schwingungen meßbar sind. Bei dieser Ausführungsform kann mittels der erfindungsgemäßen Vorrichtung der Rotor des Prüflings zunächst in dem Auswuchtmodus ausgewuchtet werden. Nach dem Auswuchten des Rotors des Prüflings wird die Vorrichtung dann durch die Steuerungsmittel automatisch in den Prüfmodus umgeschaltet, in dem Schwingungsmessungen an dem Prüfling durchgeführt werden. Da der Auswuchtvorgang und der Prüfvorgang somit unmittelbar nacheinander ausgeführt werden können, ergibt sich bei dieser Ausführungsform eine weitere Zeitersparnis.

Unter einem Auswuchten wird erfindungsgemäß auch ein Vorgang verstanden, bei dem festgestellt wird, daß der Prüfling keine oder eine unterhalb vorgegebener Grenzen liegende Unwucht aufweist und dementsprechend eine Bearbeitung des Rotors des Prüflings zur Beseitigung der Unwucht nicht erforderlich ist.

Eine andere Weiterbildung der Ausführungsform mit den Steuerungsmitteln sieht vor, daß ein der Auswuchteinrichtung zugeordneter Schwingungssensor in Signal-übertragungsverbindung mit den Steuerungsmitteln steht, derart, daß die Steuerungsmittel zum Auswuchten des Rotors des Prüflings Steuerungssignale zur Ansteuerung der Auswuchteinrichtung in Abhängigkeit von den Ausgangssignalen des der Auswuchteinrichtung zugeordneten Schwingungssensors erzeugen. Bei dieser Ausführungsform kann beispielsweise durch Auswertung der Ausgangssignale des Schwingungssensors festgestellt werden, an welcher Umfangsstelle (Unwuchtstelle) der Rotor des Prüflings eine Unwucht aufweist. Daran anschließend können die Steuerungsmittel Steuerungssignale zur Ansteuerung der Auswuchteinrichtung erzeugen, die den Rotor daraufhin zum Beseitigen oder verringern der Unwucht an einer Auswuchtstelle bearbeitet, indem beispielsweise ein zum Beseitigen oder Verringern der Unwucht erforderliches Gewicht angebracht oder Material von dem Rotor des Prüflings abgetragen wird.

Eine andere vorteilhafte Weiterbildung der erfindungsgemäßen Lehre sieht vor, daß ein der Schwingungsmeßeinrichtung zugeordneter Schwingungssensor in Signalübertragungsverbindung mit den Auswertungsmitteln steht, derart, daß die Auswertungsmittel die Ausgangssignale des Schwingungssensors auswerten. Durch Auswertung der Ausgangssignale des Schwingungssensors im Zeit-, Frequenz- oder Ortsbereich ist feststellbar, ob der Prüfling einwandfrei funktioniert oder ob Funktionsmängel vorliegen, die sich in einer Abweichung eines gemessenen Schwingungsbildes des Prüflings von einem vorgegebenen Schwingungsbild äußern.

Eine andere vorteilhafte Weiterbildung der erfindungsgemäßen Lehre sieht vor, daß die Auswuchteinrichtung Mittel zur Ermittlung einer Bezugsdrehlage des Rotors des Prüflings aufweist, derart, daß eine Ermittlung einer Unwuchtstelle des Rotors relativ zu der Bezugsdrehlage erfolgt. Bei dieser Ausführungsform wird zunächst eine Bezugsdrehlage des Rotors des Prüflings ermittelt, beispielsweise dadurch, daß an dem Rotor eine mittels eines Sensors optisch detektierbare Markierung angebracht wird. Anhand der so ermittelten Bezugsdrehlage ist dann einerseits ermittelbar, mit welcher Umfangsgeschwindigkeit sich der Rotor dreht. Andererseits ist anhand der Ausgangssignale des der Auswuchteinrichtung zugeordneten Schwingungssensors ermittelbar, an welcher Umfangsstelle (Unwuchtstelle) der Rotor eine Unwucht aufweist.

Das Auswuchten des Prüflings kann auf beliebige geeignete Weise erfolgen, beispielsweise durch Anbringen von Material, insbesondere wenigstens eines Ausgleichsgewichtes, auf dem äußeren Umfang des Rotors. Eine besonders vorteilhafte Weiterbildung der erfindungsgemäßen Lehre sieht jedoch vor, daß die Auswuchteinrichtung ein durch Steuerungsmittel ansteuerbares, materialabtragendes Werkzeug aufweist, durch das zum Auswuchten des Rotors des Prüflings an einer durch die Steuerungsmittel ermittelten Auswuchtstelle Material von dem Rotor des Prüflings abtragbar ist. Bei dieser Ausführungsform ist die Automatisierung des Auswuchtvorganges erleichtert, da das Auswuchten durch Abtragen von Material an dem Rotor des Prüflings erfolgt, und nicht durch Anbringung beispielsweise eines Ausgleichsgewichtes.

Eine vorteilhafte Weiterbildung der vorgenannten Ausführungsform sieht vor, daß das materialabtragende Werkzeug relativ zu dem Rotor, insbesondere in dessen Radialrichtung, verfahrbar ist.

Um das materialabtragende Werkzeug einfach und kostengünstig zu gestalten, sieht eine Weiterbildung der vorgenannten Ausführungsformen vor, daß das materialabtragende Werkzeug eine Bohrmaschine aufweist. Die Bohrmaschine kann hierbei eine herkömmlich arbeitende spanabhebende Bohrmaschine sein. Die Bohrmaschine kann jedoch erfindungsgemäß auch durch eine Laser-Bohrmaschine gebildet sein.

Entsprechend den jeweiligen Anforderungen kann die erfindungsgemäße Vorrichtung noch weitere Prüfeinrichtungen zur Durchführung verschiedener Prüfungen an dem Prüfling aufweisen. Beispielsweise und insbesondere kann eine Prüfeinrichtung zur Prüfung eines Sperrdifferentiales vorgesehen sein, wobei insbesondere die Wirkung des Differentiales bei einer simulierten Kurvenfahrt und die Sperrwirkung des Differentiales prüfbar sein können. Darüber hinaus kann auch eine Übersetzungsprüfung zur Prüfung der Übersetzung eines Getriebes vorgesehen sein. Daneben kann eine Meßeinrichtung zur Messung von Drehzahlen, Drehmomenten (Reibmomenten bzw. Schleppmomenten), eines Drehflankenspieles von Verzahnungen des Prüflings oder von Drehübertragungsfehlern vorgesehen sein. Es kann auch eine Einrichtung zur Durchführung einer Einflankenwälzprüfung vorgesehen sein. Es ist erfindungsgemäß darüber hinaus möglich, daß die Vorrichtung Prüfeinrichtungen zur Prüfung mechanischer oder elektrischer Aktuatoren des Prüflings aufweist.

Die Erfindung wird nachfolgend anhand der beigefügten stark schematisierten Zeichnung näher erläutert, in der Ausführungsbeispiele einer erfindungsgemäßen Vorrichtung dargestellt sind. Dabei bilden alle beschriebenen oder in der Zeichnung dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Es zeigt:
- Fig. 1: in stark schematisierter Perspektivan- sicht ein Ausführungsbeispiel einer er- findungsgemäßen Vorrichtung, die sich im Auswuchtmodus befindet,
- Fig. 2: in gleicher Darstellung wie Fig. 1 die Vorrichtung gemäß Fig. 1, die sich im Prüfmodus befindet und
- Fig. 3: eine stark schematisierte Ansicht von oben auf die Vorrichtung gemäß Fig. 2 im Prüfmodus.

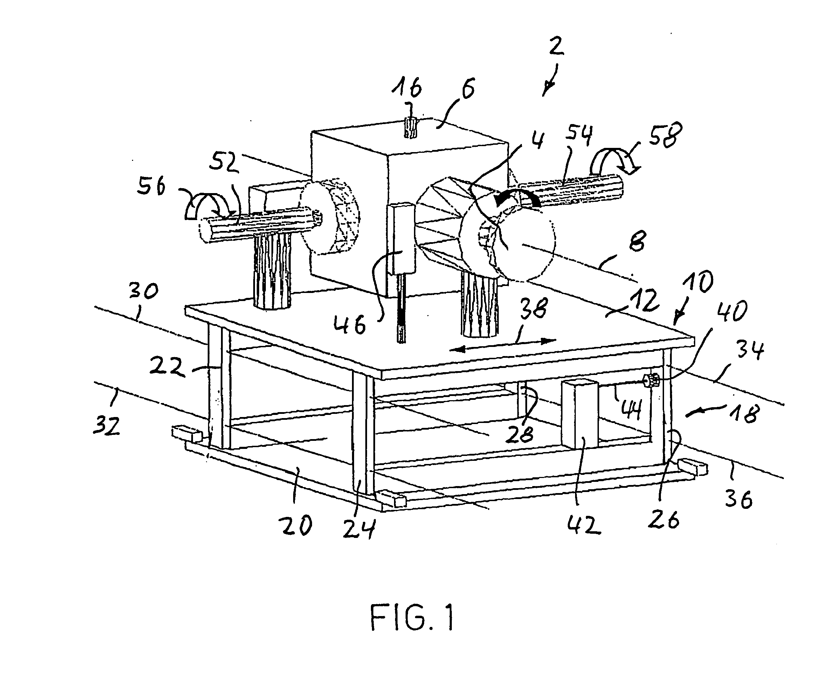

In Fig. 1 ist stark schematisiert ein Ausführungsbeispiel einer erfindungsgemäßen Vorrichtung 2 zur Durchführung von Schwingungsmessungen an einem einen Rotor 4 aufweisenden Prüfling 6 dargestellt, der bei diesem Ausführungsbeispiel durch ein Hinterachsgetriebe gebildet ist. Der Rotor 4 des Prüflings 6 ist um eine Drehachse 8 drehbar an dem Prüfling gelagert.

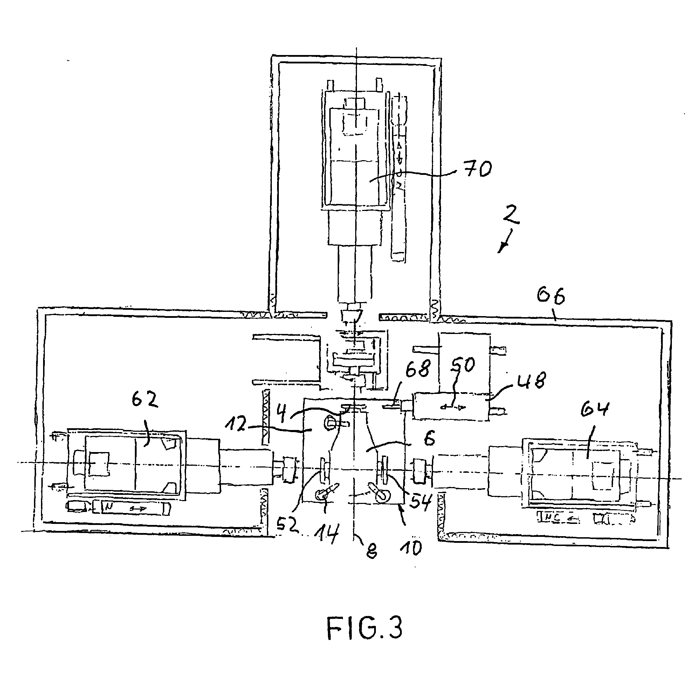

Die Vorrichtung 2 weist einen Grundkörper 10 auf, der bei diesem Ausführungsbeispiel einen Tisch 12 aufweist, an dessen Oberseite eine in Fig. 1 nicht dargestellte Halterung für den Prüfling 6 befestigt ist. In Fig. 3, die eine Ansicht von oben auf die Vorrichtung 2 gemäß Fig. 1 zeigt, ist die Halterung, die bei diesem Ausführungsbeispiel eine Spannvorrichtung 14 zum Einspannen des Prüflings 6 aufweist, erkennbar.

Die Vorrichtung 2 weist eine Schwingungsmeßeinrichtung zur Messung von durch eine Rotation des Rotors 4 des Prüflings 6 verursachten Schwingungen auf, die bei diesem Ausführungsbeispiel einen berührend arbeitenden Schwingungssensor 16 (erster Schwingungssensor) aufweist, der bei diesem Ausführungsbeispiel unmittelbar an dem Prüfling 6 angebracht ist und so mit diesem in Schwingungsübertragungsverbindung steht. Der erste Schwingungssensor 16 steht in Signalübertragungsverbindung mit in der Zeichnung nicht dargestellten Auswertungsmitteln, derart, daß die Auswertungsmittel die Ausgangssignale des Schwingungssensors in weiter unten näher erläuterter Weise auswerten.

Erfindungsgemäß weist die Vorrichtung 2 eine Auswuchteinrichtung 18 zum Feststellen und/oder Beseitigen einer Unwucht des Rotors 4 auf, die bei diesem Ausführungsbeispiel in den Grundkörper 10 der Vorrichtung 2 integriert ist.

Der Tisch 10 ist hierbei Bestandteil der Auswuchteinrichtung 18 und ist bei diesem Ausführungsbeispiel als Schwingtisch ausgebildet, der schwingfähig mit einer Basis 20 des Grundkörpers 10 verbunden ist. Ferner sind bei diesem Ausführungsbeispiel vier Blattfedern 22, 24, 26, 28 Bestandteil der Auswuchteinrichtung 18, wobei sich der Schwingtisch 12 über die Blattfedern 22, 24, 26, 28 an der Basis 20 abstützt und so elastisch federnd an der Basis 20 gelagert ist.

Wie aus Fig. 1 ersichtlich ist, sind die Blattfedern 22, 24, 26, 28 bei diesem Ausführungsbeispiel auf den Eckpunkten eines gedachten Rechteckes angeordnet. Im Bereich der Verbindungsstelle der Blattfeder 22 mit dem Schwingtisch 12 ist eine erste Gelenkachse 30 und im Bereich der Verbindungsstelle der Blattfeder 22 mit der Basis 20 eine zweite Gelenkachse 32 gebildet, die zueinander parallel sind. In hierzu entsprechender Weise sind der Blattfeder 24 ebenfalls zwei Gelenkachsen zugeordnet, die mit den Gelenkachsen 30, 32 koinzident sind. In hierzu entsprechender Weise sind den Blattfedern 26, 28 Gelenkachsen 34, 36 zugeordnet, so daß der Schwingtisch 12 statisch bestimmt, jedoch in einer in Fig. 1 durch einen Pfeil 38 symbolisierten Schwingrichtung parallel zu seiner Oberfläche um die Gelenkachsen 30, 32 bzw. 34, 36 schwingfähig und elastisch federnd an der Basis 20 gelagert ist.

Wie aus Fig. 1 ersichtlich ist, ist die Halterung relativ zu den Gelenkachsen 30, 32, 34, 36 derart angeordnet, daß die Drehachse 8 des Rotors 4 des Prüflings 6 zu den Gelenkachsen 30, 32, 34, 36 im wesentlichen parallel ist.

Die Eigenfrequenz einer durch den Schwingtisch 12 und die Blattfedern 22, 24, 26, 28 gebildeten Schwinganordnung ist hierbei so gewählt, daß sie höher ist als eine maximale Schwingfrequenz des Prüflings 6, die durch eine maximale Drehzahl seines Rotors 4 während des Prüfvorganges festgelegt ist. Auf diese Weise ist verhindert, daß die Schwinganordnung während des Prüfvorganges durch die Schwingungen des Prüflings 6 mit ihrer Eigenfrequenz erregt wird.

Der Auswuchteinrichtung 18 ist ein Schwingungssensor 40 (zweiter Schwingungssensor) zugeordnet, der in Schwingungsübertragungsverbindung mit dem Schwingtisch 12 steht. Der zweite Schwingungssensor 40 ist bei diesem Ausführungsbeispiel als berührend arbeitender Kraftsensor ausgebildet, der an einer Halterung 42 in Form eines Haltearmes gehalten ist, die unterhalb des Schwingtisches 12 angeordnet ist. Um den zweiten Schwingungssensor 40 auch bei einer Auslenkung der Blattfeder 26 ständig in Kontakt mit dieser zu halten, ist der zweite Schwingungssensor 40 über eine zwischen der Halterung 42 und dem zweiten Schwingungssensor 40 angeordnete Feder 44 gegen die Blattfeder 26 elastisch vorgespannt.

Der der Auswuchteinrichtung zugeordnete zweite Schwingungssensor 40 steht in Signalübertragungsverbindung mit in der Zeichnung nicht dargestellten Steuerungsmitteln, derart, daß die Steuerungsmittel zum Auswuchten den Prüflings 6 in weiter unten näher erläuterter Weise Steuerungssignale zur Ansteuerung der Auswuchteinrichtung 18 in Abhängigkeit von den Ausgangssignalen des zweiten Schwingungssensors 40 erzeugen.

Die Auswuchteinrichtung 18 weist ferner Mittel zur Ermittlung einer Bezugsdrehlage des Rotors 4 des Prüflings 6 auf, derart, daß eine Ermittlung einer Unwuchtstelle des Rotors 4 relativ zu der Bezugsdrehlage erfolgt. Diese Mittel weisen bei diesem Ausführungsbeispiel einen optischen Sensor 46 auf, dessen Ausgang mit den Steuerungsmitteln verbunden ist und der eine auf dem Rotor 4 des Prüflings 6 angebrachte optische Markierung abtastet. Durch Abtastung der optischen Markierung ist feststellbar, in welcher Drehlage sich der Rotor 4 jeweils befindet. Dementsprechend ist über die Steuerungsmittel ermittelbar, an welcher Umfangsstelle des Rotors 4 sich eine Unwuchtstelle befindet.

Die in die Vorrichtung 2 integrierte Auswuchteinrichtung 18 weist bei diesem Ausführungsbeispiel ferner ein durch die Steuerungsmittel ansteuerbares materialabtragendes Werkzeug auf, das bei diesem Ausführungsbeispiel durch eine mechanische Bohrmaschine 48 gebildet ist (vgl. Fig. 3). Die Bohrmaschine 48 ist in Fig. 3 in Richtung eines Doppelpfeiles 50 relativ zu dem Rotor 4 in dessen Radialrichtung verfahrbar, wobei zum Auswuchten des Rotors 4 mittels der Bohrmaschine 48 an einer durch die Steuerungsmittel ermittelten Auswuchtstelle Material von dem Rotor 4 des Prüflings 6 abtragbar ist.

Ausgangswellen 52, 54 des Prüflings 6 sind zum Drehen des Rotors 4 während eines Auswucht- oder Prüfvorganges in Fig. 1 durch nicht dargestellte Antriebsmotoren drehantreibbar, wie in Fig. 1 durch Pfeile 56, 58 angedeutet.

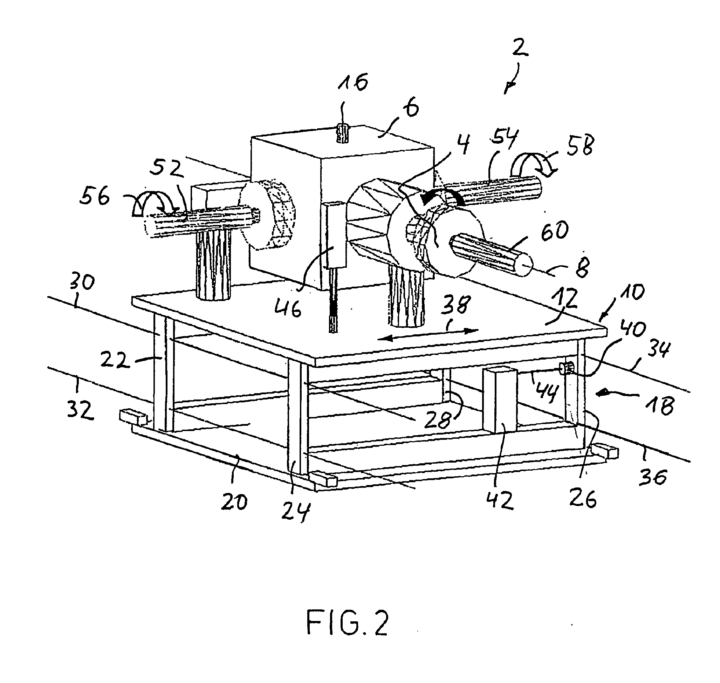

Fig. 1 stellt die Vorrichtung 2 in einem Auswuchtmodus dar, in dem der Rotor 4 des Prüflings 6 unbelastet ist. Demgegenüber stellt Fig. 2 die Vorrichtung 2 in einem Prüfmodus dar, in dem eine Kardanwelle 60 zur Simulation einer Last drehfest an den Rotor 4 des Prüflings 6 gekoppelt ist.

In Fig. 3 sind Antriebsmotoren 62, 64 zum Drehantreiben der Ausgangswellen 52, 54 des Prüflings 6 erkennbar.

Die Vorrichtung 2 ist bei diesem Ausführungsbeispiel von einem Gehäuse 66 umgeben, das als Schall- und Berührungsschutz dient.

Die Funktionsweise der erfindungsgemäßen Vorrichtung 2 ist wie folgt:

Zur Durchführung von Schwingungsmessungen an dem Prüfling 6 wird dieser auf den Tisch 12 aufgesetzt, beispielsweise mittels eines Manipulators oder eines Roboters, und mittels der Spannvorrichtung 14 ortsfest auf dem Tisch 12 aufgespannt. Daran anschließend steuern die Steuerungsmittel die Antriebsmotoren 62, 64 so an, daß diese die Ausgangswellen 52, 54 des Prüflings 6 drehantreiben, so daß sich der Rotor 4 um die Drehachse 8 dreht.

Weist der Rotor 4 eine Unwucht auf, so versetzt diese den Schwingtisch 12 in Schwingungen in Schwingrichtung 38. Diese Schwingungen werden über den zweiten Schwingungssensor 40 aufgenommen, und das Ausgangssignal des zweiten Schwingungssensors 40 wird den Steuerungsmitteln zugeführt.

Die Steuerungsmittel werten das Ausgangssignal des zweiten Schwingungssensors 40 im Zeit- und/oder Frequenz- und/oder Ortsbereich aus, um festzustellen, ob der Rotor 4 eine Unwucht aufweist.

Falls der Rotor 4 keine oder eine unterhalb vorgegebener Grenzen liegende Unwucht aufweist, so kann der Auswuchtvorgang beendet und die Vorrichtung 2 durch die Steuerungsmittel aus dem Auswuchtmodus in einen Prüfmodus geschaltet werden.

Weist demgegenüber der Rotor 4 eine Unwucht auf, so wird die Lage der Unwucht in Umfangsrichtung des Rotors 4 relativ zu der über den optischen Sensor 46 ermittelten Referenzdrehlage ermittelt. Daran anschließend werden die Antriebsmotoren 62, 64 von den Steuerungsmitteln angehalten und nachfolgend so angesteuert, daß der Rotor 4 eine Drehlage einnimmt, in der eine Auswuchtstelle, an der zum Beseitigen der Unwucht Material abgetragen werden muß, genau gegenüber einem Bohrer 68 der Bohrmaschine 48 liegt. Daran anschließend wird die Bohrmaschine 48 bei laufendem Bohrer 68 in Radialrichtung des Rotors 4 gegen diesen zugestellt, so daß in der äußeren Umfangsfläche des Rotors 4 eine Auswuchtbohrung gebildet und so Material abgetragen wird. Die radiale Tiefe der Auswuchtbohrung hängt hierbei von der zum Ausgleichen der Unwucht erforderlichen Materialmenge ab, die zuvor von den Steuerungsmitteln ermittelt worden ist.

Falls entsprechend den jeweiligen Anforderungen erforderlich, können anstelle einer Auswuchtbohrung auch mehrere Auswuchtbohrungen an unterschiedlichen Umfangsstellen des Rotors 4 gebildet werden.

Nach der Durchführung des Auswuchtvorganges kann die Vorrichtung dann durch die Steuerungsmittel in den Prüfmodus geschaltet werden, falls die Unwucht beseitigt ist. Falls demgegenüber die Unwucht noch nicht oder in nicht ausreichendem Maße beseitigt ist, kann der zuvor beschriebene Auswuchtvorgang so oft wiederholt werden, bis der Rotor 4 des Prüflings 6 in dem gewünschten Maße ausgewuchtet ist.

Nach dem Abschluß des Auswuchtvorganges schalten die Steuerungsmittel die Vorrichtung 2 in einen Prüfmodus um. In diesem Prüfmodus wird zunächst die Kardanwelle 60 zur Lastsimulation an den Rotor 4 des Prüflings 6 angekoppelt, wie in Fig. 2 dargestellt. Daran anschließend treiben die Antriebsmotoren 62, 64 die Ausgangswellen 52, 54 des Prüflings 6 derart an, daß sich der Rotor 4 und mit diesem die Kardanwelle 60 dreht. In diesem Zustand, in dem die Kardanwelle 60 eine Last simuliert, werden Schwingungen des Prüflings 6 über den ersten Schwingungssensor 16 aufgenommen, und die Ausgangssignale des ersten Schwingungssensors 16 werden den nicht dargestellten Auswertungsmitteln zugeführt. Hierbei kann die Kardanwelle 60 über einen weiteren Antriebsmotor 70 (vgl. Fig. 3) mit einem zusätzlichen Drehmoment beaufschlagt werden. Die Auswertungsmittel werten die Ausgangssignale des ersten Schwingungssensors 16 im Zeit- und/oder Frequenz-und/oder Ortsbereich aus, wobei anhand des sich ergebenden Schwingungsbildes des Prüflings 6 feststellbar ist, ob der Prüfling 6 in Ordnung ist oder ob und ggf. welche Defekte an dem Prüfling 6 vorliegen.

Da die erfindungsgemäße Vorrichtung 2 eine integrierte Auswuchteinrichtung 18 aufweist, kann der Prüfling 6 während des Auswuchtvorganges und des Prüfvorganges ständig in der durch die Spannvorrichtung 14 gebildeten Halterung eingespannt bleiben. Der Prüfling 6 muß also erst nach dem Abschluß sämtlicher Prüfvorgänge entnommen werden. Die erfindungsgemäße Vorrichtung 2 ermöglicht somit sowohl ein Auswuchten als auch die Durchführung von Schwingungsmessungen an dem Prüfling 6 mit ein und derselben Vorrichtung in einer einfachen und zeitsparenden Weise. Unter der Steuerung der Steuerungsmittel kann sowohl das Auswuchten als auch die sich daran anschließende Schwingungsmessung vollautomatisch ausgeführt werden.

## Patentansprüche

1. Auswuchtvorrichtung für Rotoren eines wenigstens einen Rotor (4) aufweisenden Prüflings,
mit einem Grundkörper (10),
mit einer Halterung für den Prüfling (6),
mit wenigstens einem Schwingungssensor (40) zur Messung von durch eine Rotation des wenigstens einen Rotors (4) des Prüflings verursachten Schwingungen, und
mit einer an dem Grundkörper (10) angeordneten Auswuchteinrichtung (18) zum Feststellen und/oder Beseitigen einer Unwucht des Rotors mittels Auswertung der von dem wenigstens einen Schwingungssensor (40) gelieferten Meßwerte,
**dadurch gekennzeichnet,**
**daß** ein als Schwingtisch ausgebildeter Tisch (12) vorgesehen ist, der Schwingfähig mit einer Basis (20) des Grundkörpers verbunden ist und an dem die Halterung für den Prüfling befestigt ist; und
**daß** zusätzlich eine Schwingungsmeßeinrichtung vorgesehen ist sowie Steuerungsmittel zur Ansteuerung der Schwingungsmeßeinrichtung und der Auswuchteinrichtung derart, daß die Vorrichtung nach einem Auswuchten eines Rotors (4) eines Prüflings in einem Auswuchtmodus mittels der Auswuchteinheit (18) durch die Steuerungsmittel in einen Prüfmodus umschaltbar ist, in dem mittels der Schwingungsmeßeinrichtung durch eine Rotation wenigstens eines Rotors des Prüflings verursachte Schwingungen meßbar sind.

2. Vorrichtung nach Anspruch 1, **dadurch gekennzeichnet, daß** die Halterung eine Spannvorrichtung (14) zum Einspannen des Prüflings (6) aufweist.

3. Vorrichtung nach Anspruch 1, **dadurch gekennzeichnet, daß** der Schwingtisch (12) um wenigstens eine Gelenkachse (30, 32, 34, 36) beweglich an der Basis (20) gelagert ist.

4. Vorrichtung nach Anspruch 3, **dadurch gekennzeichnet, daß** die Federmittel wenigstens eine Blattfeder (22, 24, 26, 28) aufweisen, wobei im Bereich der Verbindungsstellen der Blattfeder (22, 24, 26, 28) mit dem Tisch (12) und der Basis (20) jeweils eine Gelenkachse (30, 32, 34, 36) gebildet ist.

5. Vorrichtung nach Anspruch 4, **dadurch gekennzeichnet, daß** vier zueinander beabstandete Blattfedern (22, 24, 26, 28) vorgesehen sind, die vorzugsweise auf den Eckpunkten eines Rechteckes angeordnet sind.

6. Vorrichtung nach einem der vorhergehenden Ansprüche 3 bis 5, **dadurch gekennzeichnet, daß** die Halterung relativ zu der Gelenkachse oder den Gelenkachsen (30, 32, 34, 36) derart angeordnet ist, daß bei Aufnahme eines Prüflings (6) in der Halterung die Drehachse (8) seines Rotors (4) zu der Gelenkachse oder den Gelenkachsen (30, 32, 34, 36) im wesentlichen parallel ist.

7. Vorrichtung nach einem der vorhergehenden Ansprüche, **dadurch gekennzeichnet, daß** die Eigenfrequenz einer durch den Schwingtisch (12) und die Federmittel gebildeten Schwinganordnung so gewählt ist, daß sie höher ist als eine maximale Schwingfrequenz des Prüflings (6), die durch eine maximale Drehzahl seines Rotors (4) während des Prüfvorganges festgelegt ist.

8. Vorrichtung nach einem der vorhergehenden Ansprüche, **dadurch gekennzeichnet, daß** die Schwingungsmeßeinrichtung wenigstens einen Schwingungssensor (16) aufweist, der in Schwingungsübertragungsverbindung mit dem Prüfling (6) steht oder bringbar ist.

9. Vorrichtung nach einem der vorhergehenden Ansprüche, **dadurch gekennzeichnet, daß** die Auswuchteinrichtung (18) wenigstens einen Schwingungssensor (40) aufweist, der in Schwingungsübertragungsverbindung mit dem Schwingtisch (12) steht.

10. Vorrichtung nach Anspruch 8 oder 9, **dadurch gekennzeichnet, daß** der Schwingungssensor ein berührungslos arbeitender Sensor ist.

11. Vorrichtung nach Anspruch 10, **dadurch gekennzeichnet, daß** der Schwingungssensor als Laservibrometer ausgebildet ist.

12. Vorrichtung nach Anspruch 10, **dadurch gekennzeichnet, daß** der Schwingungssensor als akustischer Sensor ausgebildet ist.

13. Vorrichtung nach Anspruch 8 oder 9, **dadurch gekennzeichnet, daß** der Schwingungssensor (16, 40) ein berührend arbeitender Sensor ist.

14. Vorrichtung nach Anspruch 8 und 13, **dadurch gekennzeichnet, daß** der Schwingungssensor (16) an dem Prüfling anbringbar oder angebracht ist.

15. Vorrichtung nach Anspruch 13 oder 14, **dadurch gekennzeichnet, daß** der Schwingungssensor (16) als Beschleunigungssensor ausgebildet ist.

16. Vorrichtung nach Anspruch 9 und 13, **dadurch gekennzeichnet, daß** sich der Schwingungssensor (40) an einer Feder der Federmittel, insbesondere einer Blattfeder (26) abstützt.

17. Vorrichtung nach Anspruch 16, **dadurch gekennzeichnet, daß** der Schwingungssensor (40) an einer unterhalb des Schwingtisches (12) angeordneten Halterung (42) gehalten ist.

18. Vorrichtung nach Anspruch 16 oder 17, **dadurch gekennzeichnet, daß** der Schwingungssensor (40) gegen die Feder der Federmittel elastisch vorgespannt ist.

19. Vorrichtung nach einem der Ansprüche 9 bis 17, **dadurch gekennzeichnet, daß** der Schwingungsmeßeinrichtung einerseits und der Auswuchteinrichtung (18) andererseits jeweils wenigstens ein separater Schwingungssensor (16, 40) zugeordnet ist.

20. Vorrichtung nach einem der Ansprüche 9 bis 19, **dadurch gekennzeichnet, daß** der Schwingungsmeßeinrichtung und der Auswuchteinrichtung (18) wenigstens ein gemeinsamer Schwingungssensor zugeordnet ist.

21. Vorrichtung nach einem der vorhergehenden Ansprüche, **gekennzeichnet durch** Steuerungsmittel zur vorzugsweisen automatischen Ansteuerung der Schwingungsmeßeinrichtung und der Auswuchteinrichtung (18) und/oder Auswertungsmittel zur Auswertung von Ausgangssignalen des Schwingungssensors oder der Schwingungssensoren.

22. Vorrichtung nach Anspruch 21, **dadurch gekennzeichnet, daß** die Vorrichtung nach einem Auswuchten eines Rotors (4) eines Prüflings (6) in einem Auswuchtmodus mittels der Auswuchteinrichtung (18) durch die Steuerungsmittel automatisch in einen Prüfmodus umschaltbar ist, in dem mittels der Schwingungsmeßeinrichtung durch eine Rotation wenigstens eines Rotors (4) des Prüflings (6) verursachte Schwingungen meßbar sind.

23. Vorrichtung nach Anspruch 21 oder 22, **dadurch gekennzeichnet, daß** ein der Auswuchteinrichtung (18) zugeordneter Schwingungssensor (40) in Signalübertragungsverbindung mit den Steuerungsmitteln steht, derart, daß die Steuerungsmittel zum Auswuchten des Rotors (4) des Prüflings (6) Steuerungssignale zur Ansteuerung der Auswuchteinrichtung (18) in Abhängigkeit von den Ausgangssignalen des der Auswuchteinrichtung (18) zugeordneten Schwingungssensors (40) erzeugen.

24. Vorrichtung nach einem der Ansprüche 21 bis 23, **dadurch gekennzeichnet, daß** ein der Schwingungsmeßeinrichtung zugeordneter Schwingungssensor (16) in Signal-übertragungsverbindung mit den Auswertungsmitteln steht, derart, daß die Auswertungsmittel die Ausgangssignale des Schwingungssensors (16) auswerten.

25. Vorrichtung nach einem der vorhergehenden Ansprüche, **dadurch gekennzeichnet, daß** die Auswuchteinrichtung (18) Mittel zur Ermittlung einer Bezugsdrehlage des Rotors (4) des Prüflings (6) aufweist, derart, daß eine Ermittlung einer Unwuchtstelle des Rotors (4) relativ zu der Bezugsdrehlage erfolgt.

26. Vorrichtung nach einem der vorhergehenden Ansprüche, **dadurch gekennzeichnet, daß** die Auswuchteinrichtung (18) ein durch die Steuerungsmittel ansteuerbares, materialabtragendes Werkzeug aufweist, durch das zum Auswuchten des Rotors (4) des Prüflings (6) an einer durch die Steuerungsmittel ermittelten Auswuchtstelle Material von dem Rotor (4) des Prüflings (6) abtragbar ist.

27. Vorrichtung nach Anspruch 26, **dadurch gekennzeichnet, daß** das materialabtragende Werkzeug relativ zu dem Rotor (4), insbesondere in dessen Radialrichtung, verfahrbar ist.

28. Vorrichtung nach Anspruch 26 oder 27, **dadurch gekennzeichnet, daß** das materialabtragende Werkzeug eine Bohrmaschine (48) aufweist.

## Claims

1. A balancing device for rotors of a test piece comprising at least one rotor (4),
comprising a basic body (10),
a support for the test piece (6),
at least one vibration sensor (40) for measuring vibrations caused by a rotation of the at least one rotor (4) of the test piece, and a balancing device (18) arranged on the basic body (10) for establishing and/or removing an imbalance of the rotor by evaluating the measurement values supplied by the at least one vibration sensor (40),
**characterised in that**
a table (12) designed in the form of a vibration table is provided, which is connected to allow vibration with a base (20) of the basic body and is secured onto the support for the test piece, and
**in that** in addition a vibration measuring device is provided as well as control means for controlling the vibration measuring device and the balancing device, such that the device after balancing a rotor (4) of a test piece in a balanced mode by means of the balancing unit (18) can be switched by the control means into a test mode, in which by means of the vibration measuring device vibrations caused by a rotation of at least one rotor of the test piece can be measured.

2. The device according to claim 1, **characterised in that** the support comprises a clamping device (14) for clamping the test piece (6).

3. The device according to claim 1, **characterised in that** the vibration table (12) is mounted on the base (20) to move about at least one hinge axis (30, 32, 34, 36).

4. The device according to claim 3, **characterised in that** the spring means comprise at least one leaf spring (22, 24, 26, 28), whereby in the region of the connecting points of the leaf spring (22, 24, 26, 28) a hinge axis (30, 32, 34, 36) is formed respectively with the table (12) and the base (20).

5. The device according to claim 4, **characterised in that** four spaced apart leaf springs (22, 24, 26, 28) are provided, which are preferably arranged at the corner points of a rectangle.

6. The device according to one of the preceding claims 3 to 5, **characterised in that** the support is arranged relative to the hinge axis or hinge axes (30, 32, 34, 36) such that when mounting a test piece (6) in the support the rotary axis (8) of its rotor (4) is substantially parallel to the hinge axis or hinge axes (30, 32, 34, 36).

7. The device according to one of the preceding claims, **characterised in that** the characteristic frequency of a vibration arrangement formed by the vibration table (12) and the spring device is selected such that it is greater than a maximum vibration frequency of the test piece (6), which is defined by a maximum speed of its rotor (4) during the testing process.

8. The device according to one of the preceding claims, **characterised in that** the vibration measuring device comprises at least one vibration sensor (16), which is in a vibration-transmitting connection with the test piece (6) or can be brought into such a connection therewith.

9. The device according to one of the preceding claims, **characterised in that** the balancing device (18) comprises at least one vibration sensor (40), which is in vibration-transmitting connection with the vibration table (12).

10. The device according to claim 8 or 9, **characterised in that** the vibration sensor is a contactless sensor.

11. The device according to claim 10, **characterised in that** the vibration sensor is designed in the form of a laser vibrometer.

12. The device according to claim 10, **characterised in that** the vibration sensor is designed in the form of an acoustic sensor.

13. The device according to claim 8 or 9, **characterised in that** the vibration sensor (16, 40) is a contacting sensor.

14. The device according to claim 8 and 13, **characterised in that** the vibration sensor (16) can be brought into in contact or is in contact with the test piece.

15. The device according to claim 13 or 14, **characterised in that** the vibration sensor (16) is designed in the form of an acceleration sensor.

16. The device according to claim 9 and 13, **characterised in that** the vibration sensor (40) is supported on a spring of the spring means, in particular a leaf spring (26).

17. The device according to claim 16, **characterised in that** the vibration sensor (40) is held in place on a support (42) arranged underneath the vibration table (12).

18. The device according to claim 16 or 17, **characterised in that** the vibration sensor (40) is prestressed elastically against the spring of the spring means.

19. The device according to one of claims 9 to 17, **characterised in that** at least one separate vibration sensor (16, 40) is allocated to both the vibration measuring device and the balancing device (18).

20. The device according to one of claims 9 to 19, **characterised in that** at least one common vibration sensor is allocated to the vibration measuring device and the balancing device (18).

21. The device according to one of the preceding claims, **characterised by** control means preferably for the automatic control of the vibration measuring device and the balancing device (18) and/or evaluating means for evaluating output signals of the vibration sensor or the vibration sensors.

22. The device according to claim 21, **characterised in that** after balancing a rotor (40) of a test piece (6) in a balancing mode by means of the balancing device (18) the device can be switched by the control means automatically into a test mode, in which by means of the vibration measuring device vibrations caused by rotating at least one rotor (4) of the test piece (6) can be measured.

23. The device according to claim 21 or 22, **characterised in that** a vibration sensor (40) allocated to the balancing device (18) is in signal-transmitting connection with the control means, such that, in order to balance the rotor (4) of the test piece (6) the control means generate control signals for activating the balancing device (18) on the basis of output signals from the vibration sensor (40) allocated to the balancing device (18).

24. The device according to one of claims 21 to 23, **characterised in that** a vibration sensor (16) allocated to the vibration measuring device includes a signal-transmitting connection with the evaluation means, such that the evaluation means evaluates output signals from the vibration sensor (16).

25. The device according to one of the preceding claims, **characterised in that** the balancing device (18) has a device for establishing a reference rotational position for the rotor (4) of the test piece (6), such that a point of imbalance of the rotor (4) is identified relative to the reference rotational position.

26. The device according to one of the preceding claims, **characterised in that** the balancing device (18) includes a material-removing tool that can be activated by the control means, and by which material can be removed from the rotor (4) of the test piece (6) in order to balance the rotor (4) of the test piece (6) at a balancing point identified by the control means.

27. The device according to claim 26, **characterised in that** the material-removing tool can be moved relative to the rotor (4), in particular in its radial direction.

28. The device according to claim 26 or 27, **characterised in that** the material-removing tool includes a drill (48).

## Revendications

1. Dispositif d'équilibrage pour des rotors d'un appareil testé présentant au moins un rotor (4),
avec au moins un corps de base (10),
avec un support pour l'appareil testé (6),
avec au moins un détecteur de vibrations (40) pour mesurer des vibrations causées par une rotation du au moins un rotor (4) de l'appareil testé (6) et
avec un système d'équilibrage (18) disposé sur le corps de base (10) pour mettre un balourd du rotor en évidence et/ou le supprimer au moyen de des valeurs de mesures fournies par le au moins un détecteur de vibrations (40),
**caractérisé en ce que**
il est prévu une table (12), conformée en table vibrante, reliée en vibrations à une base (20) du corps de base et sur laquelle est fixé le support de l'appareil testé et **en ce qu'**il est prévu en outre un dispositif de mesure de vibrations ainsi qu'un dispositif de commande pour commander le dispositif de mesure de vibrations et le système d'équilibrage de façon que le dispositif puisse être commuté par le dispositif de commande, après équilibrage d'un rotor (4) d'appareil testé, dans un mode d'équilibrage au moyen de l'unité d'équilibrage (18), dans un mode de test, dans lequel une vibration causée par la rotation d'au moins un rotor de l'appareil testé puisse être mesurée par le dispositif de mesure de vibrations.

2. Dispositif selon la revendication 1, **caractérisé en ce que** le support présente un dispositif de serrage (14) pour fixer des appareils à tester (6).

3. Dispositif selon la revendication 1, **caractérisé en ce que** la table vibrante (12) est monté sur la base (20) mobile autour d'un axe d'articulation (30, 32, 34, 36).

4. Dispositif selon la revendication 3, **caractérisé en ce que** des moyens élastiques comportent au moins un ressort à lame (22, 24, 26, 28), un axe d'articulation (30, 32, 34, 36) étant formé chaque fois dans la zone des points de liaison des ressorts à lame (22, 24, 26, 28) avec la table (12) et la base (20).

5. Dispositif selon la revendication 4, **caractérisé en ce que** quatre ressorts à lame (22, 24, 26, 28) espacés entre eux sont prévus, disposés de préférence aux sommets d'un rectangle.

6. Dispositif selon l'une des revendications précédentes 3 à 5, **caractérisé en ce que** le support est disposé par rapport à l'axe ou aux axes d'articulation (30, 32, 34, 36) de façon que lorsqu'un appareil testé (6) est placé dans le support, l'axe de rotation (8) de son rotor (4) soit essentiellement parallèle à l'axe ou aux axes d'articulation (30, 32, 34, 36).

7. Dispositif selon l'une des revendications précédentes, **caractérisé en ce que** la fréquence propre d'un système de vibrations formé par la table vibrante (12) et les moyens élastiques est choisie de façon à être supérieure à une fréquence de vibrations de l'appareil à tester (6) qui est fixée par une vitesse de rotation maximale de son rotor (4).

8. Dispositif selon l'une des revendications précédentes, **caractérisé en ce que** le dispositif de mesure de vibrations présente au moins un capteur de vibrations (16) qui est ou peut être amené en liaison de transfert de vibrations avec le appareil à tester (6).

9. Dispositif selon l'une des revendications précédentes, **caractérisé en ce que** le système d'équilibrage (18) présente au moins un capteur de vibrations (40) qui est en liaison de transfert de vibrations avec la table vibrante (12).

10. Dispositif selon la revendication 8 ou 9, **caractérisé en ce que** le capteur de vibrations est un capteur travaillant sans contact.

11. Dispositif selon la revendication 10, **caractérisé en ce que** le capteur de vibrations est constitué par un vibromètre laser.

12. Dispositif selon la revendication 10, **caractérisé en ce que** le capteur de vibrations est un capteur acoustique.

13. Dispositif selon la revendication 8 ou 9, **caractérisé en ce que** le capteur de vibrations (16, 40) est un capteur travaillant en contact.

14. Dispositif selon les revendications 8 et 13, **caractérisé en ce que** le capteur de vibrations (16) peut être amené ou est monté sur l'appareil à tester.

15. Dispositif selon la revendication 13 ou 14, **caractérisé en ce que** le capteur de vibrations (16) est constitué par un capteur d'accélération.

16. Dispositif selon les revendications 9 et 13, **caractérisé en ce que** le capteur de vibrations (40) s'appuie sur un ressort des moyens élastiques, notamment un ressort à lame (26).

17. Dispositif selon la revendication 16, **caractérisé en ce que** le capteur de vibrations (40) est maintenu par un support (42) disposé au-dessous de la table vibrante (12).

18. Dispositif selon la revendications 16 ou 17, **caractérisé en ce que** le capteur de vibrations (40) est précontraint contre le ressort des moyens élastiques.

19. Dispositif selon l'une des revendications 9 à 17, **caractérisé en ce qu'**au moins un capteur de vibrations (16, 40) individuel est affecté au dispositif de mesures de vibrations d'une part et au dispositif d'équilibrage (18) d'autre part.

20. Dispositif selon l'une des revendications 9 à 17, **caractérisé en ce que** le dispositif de mesures de vibrations et le dispositif d'équilibrage (18) sont équipés d'un capteur de vibrations commun.

21. Dispositif selon l'une des revendications précédentes, **caractérisé par** des moyens de commande, de préférence pour commander automatiquement le dispositif de mesures de vibrations et le dispositif d'équilibrage (18) et/ou par des moyens d'évaluation pour évaluer des signaux de sortie du capteur de vibrations ou des capteurs de vibrations.

22. Dispositif selon la revendication 21, **caractérisé en ce que** le dispositif, après équilibrage du rotor (4) d'un appareil à tester, dans un mode d'équilibrage au moyen du dispositif d'équilibrage (18) est commuté automatiquement par les moyens de commande en mode test, dans lequel les vibrations causées par la rotation d'au moins un rotor (4) de l'appareil à tester au moyen du dispositif de mesures de vibrations.

23. Dispositif selon la revendication 21 ou 22, **caractérisé en ce qu'**un capteur de vibrations (40) équipant le dispositif d'équilibrage (18) est en communication de signaux avec les moyens de commande de telle façon que, pour équilibrer le rotor (4) de l'appareil testé (6), les moyens de commande génèrent des signaux de commande pour commander le dispositif d'équilibrage (18) en fonction des signaux de sortie du capteur de vibrations (40) équipant le dispositif d'équilibrage (18).

24. Dispositif selon l'une des revendications 21 à 23 **caractérisé en ce qu'**un capteur de vibrations (16) équipant le dispositif de mesure de vibrations est en communication de signaux avec les moyens d'exploitation de sorte que les moyens d'exploitation évaluent les signaux de sortie du capteur de vibrations (16).

25. Dispositif selon l'une des revendications précédentes **caractérisé en ce que** le dispositif d'équilibrage (18) présentent des moyens pour détecter une position en rotation de référence du rotor (4) de l'appareil testé (6) de sorte que la détection d'un point de balourd du rotor (4) puisse être déterminée relativement à ladite position en rotation de référence.

26. Dispositif selon l'une des revendications précédentes **caractérisé en ce que** le dispositif d'équilibrage (18) présente un outil pouvant être commandé par les moyens de commande, par lequel de la matière peut être enlevée du rotor (4) de l'appareil testé (6), afin d'équilibrer le rotor (4) de l'appareil testé (6) en un point de balourd détecté par les moyens de commande

27. Dispositif selon la revendication 26, **caractérisé en ce que** l'outil d'enlèvement de matière peut être déplacé par rapport au rotor (4), notamment dans sa direction transversale.

28. Dispositif selon la revendication 26 ou 27, **caractérisé en ce que** l'outil d'enlèvement de matière présente une perceuse (48).
